# EUROPÄISCHE PATENTANMELDUNG

(11) **EP 4 428 465 A1**
(43) Veröffentlichungstag der Anmeldung: **11.09.2024**
(21) Anmeldenummer: 24157544.8
(22) Anmeldetag: 14.02.2024
(51) Int. Cl.: F24F 13/32, F24H 9/06, F24F 1/60, F24F 1/40, F24F 13/24, F16M 7/00

(54) **GERÄTEFUSS FÜR EINE WÄRMEPUMPE UND WÄRMEPUMPE MIT GERÄTEFUSS**

(30) Priorität: 10.03.2023 DE 102023105986
(71) Anmelder: Stiebel Eltron GmbH & Co. KG, 37603 Holzminden (DE)
(72) Erfinder: Kirchhoff, Hartmut, 37671 Höxter (DE); Schulze, Hendrik, 37586 Dassel (DE); Löwens, Thomas, 37627 Stadtoldendorf (DE); Fitz, Jannik, 37603 Holzminden (DE); Müller, Johanna Dorothea, 33100 Paderborn (DE)

(57) **Zusammenfassung**

Die Erfindung betrifft einen Gerätefuß 100 für eine Wärmepumpe, wobei der Gerätefuß einen Fußteller 110 und einen Fußsockel 120 umfasst und durch Aufstellung eine Standrichtung S definiert. Der Fußteller ist in der Standrichtung unterhalb des Fußsockels angeordnet. Weiter weist der Fußteller eine Aussparung 180 auf, um mit einem Untergrund lösbar verbunden zu werden. Eine Ausdehnung des Fußtellers senkrecht zu der Standrichtung ist zumindest in eine Richtung größer als eine Ausdehnung des Fußsockels senkrecht zu der Standrichtung. Weiter weist der Fußteller wenigstens eine zu der Standrichtung schräg verlaufende Fixierungsbohrung auf. Der erfindungsgemäße Gerätefuß befestigt an einer Wärmepumpe ermöglicht in verschiedenen Schritten eines Transports der Wärmepumpe eine einfache Fixierung der Wärmepumpe und erhöht dadurch die Sicherheit während des Transports.

## Beschreibung

Die vorliegende Erfindung betrifft einen Gerätefuß für eine Wärmepumpe, insbesondere eine Bodenplatte mit vier Gerätefüßen für eine Wärmepumpe.

Es gibt verschiedene Möglichkeiten, eine Wärmepumpe zu installieren, insbesondere wird zwischen einer Bodenaufstellung, einer Wandmontage und einer Flachdachmontage unterschieden, wobei jede der Installationsmöglichkeiten eigene Voraussetzungen definiert. Im Fall, dass die Wärmepumpe auf einem Boden oder einem Flachdach aufgestellt werden soll, ist es bekannt, zum Beispiel ein Fundament, wie einen Betonsockel oder ein Streifenfundament, als Untergrund zu verwenden, wobei das Fundament erhöht oder auf Bodenhöhe angeordnet sein kann. Alternativ kann die Wärmepumpe auch auf Montageschienen oder einer Konsole verschraubt werden. Montageschienen oder eine Konsole können auch für eine Wandmontage verwendet werden.

Es hat sich gezeigt, dass es sinnvoll sein kann, für eine Bodenaufstellung oder Flachdachmontage Füße unter der Wärmepumpe vorzusehen, um die Wärmepumpe beabstandet von einem Untergrund aufzustellen. Dies erleichtert ein Aufstellen bzw. Installieren der Wärmepumpe, da beim Aufstellen unter die Wärmepumpe gegriffen werden kann. Zusätzlich bringt eine Beabstandung der Wärmepumpe zu einem Untergrund den Vorteil, dass weitere Bauteile unter der Wärmepumpe vorgesehen sein können, wie zum Beispiel eine Kondensatwanne. Zur Abdeckung der Füße bzw. des Bereichs zwischen der Wärmepumpe und dem Untergrund kann eine Blende vorgesehen sein.

Es werden jedoch noch weitere Anforderungen an eine Wärmepumpe gestellt, um ein sicheres Aufstellen zu gewährleisten. Insbesondere muss ein sicherer Transport von der Wärmepumpe zu dem Aufstellort gewährleistet werden, wobei die Wärmepumpe meist verschiedene Schritte des Transportes durchläuft. Diese Schritte werden in der Regel zumindest teilweise von einem oder mehreren Installateuren begleitet.

Für einen sicheren Transport der Wärmepumpe ist es bekannt, die Wärmepumpe auf einer Holzpalette o.Ä. zu positionieren und die Wärmepumpe auf der Holzpalette zu fixieren. Ein Fixieren kann zum Beispiel durch ein Verspannen der Wärmepumpe zu der Holzpalette durch die Installateure realisiert werden. Auf der Holzpalette kann die Wärmepumpe dann beispielsweise in ein Fahrzeug gestellt werden, dass dann in die Nähe des Aufstellortes der Wärmepumpe fährt. Weiter musst die Wärmepumpe, beispielsweise von den Installateuren, von dem Fahrzeug zu dem Aufstellort getragen werden. Um die Wärmepumpe, die im Regelfall ein hohes Gewicht aufweist, zu tragen, können zum Beispiel Transportbänder verwendet werden.

Der Transport ist somit in mehreren Schritten von dem richtigen Handling der Installateure abhängig, wodurch auch die Sicherheit der Wärmepumpe während des Transports von dem richtigen Handling der Installateure abhängt. Auch wenn die Installateure in der Regel geschult sind, kann das Gewicht und die Größe der Wärmepumpe dazu führen, dass die Sicherheit der Wärmepumpe während des Transports nicht immer im vollen Maße gewährleistet werden kann.

Ein der vorliegenden Erfindung zugrundeliegendes Ziel ist es, einen Transport der Wärmepumpe zu vereinfachen und damit die Sicherheit der Wärmepumpe während des Transports zu erhöhen.

Erfindungsgemäß wird nach einem ersten Aspekt ein Gerätefuß für eine Wärmepumpe vorgeschlagen, wie er in Anspruch 1 definiert ist, nämlich ein Gerätefuß für eine Wärmepumpe, wobei der Gerätefuß einen Fußteller und einen Fußsockel umfasst und durch Aufstellung eine Standrichtung definiert, wobei der Fußteller in der Standrichtung unterhalb des Fußsockels angeordnet ist, wobei der Fußteller eine Aussparung aufweist, um mit einem Untergrund lösbar verbunden zu werden, wobei eine Ausdehnung des Fußtellers senkrecht zu der Standrichtung zumindest in eine Richtung größer ist als eine Ausdehnung des Fußsockels senkrecht zu der Standrichtung und wobei der Fußteller wenigstens eine zu der Standrichtung schräg verlaufende Fixierungsbohrung aufweist.

Der erfindungsgemäße Gerätefuß ermöglicht durch die zu der Standrichtung schräg verlaufende Fixierungsbohrung ein temporäres Fixieren der Wärmepumpe zum Beispiel auf einer Holzpalette mit Hilfe eines Befestigungsmittels wie einer Schraube. Die schräg verlaufende Fixierungsbohrung vereinfacht es einem Installateur, das Befestigungsmittel durch die Fixierungsbohrung zu führen, ohne dass die über dem Fuß angeordnete Wärmepumpe dem Installateur bzw. dem Befestigungsmittel im Weg ist. Weiter stellt der erfindungsgemäße Gerätefuß einen Fußsockel bereit, an dem ein Transportband zum Heben der Wärmepumpe befestigt werden kann, wobei der Fußteller durch eine zumindest in eine Richtung senkrecht zu der Standrichtung größere Ausdehnung im Vergleich zu der Ausdehnung des Fußsockels senkrecht zu der Standrichtung ein Verrutschen des Transportbandes vom Fußsockel verhindert oder zumindest einschränkt. Dadurch wird ein Handling eines Installateurs während des Transports der Wärmepumpe vereinfacht und damit die Sicherheit der Wärmepumpe während des Transports erhöht.

Der Gerätefuß ist für eine Wärmepumpe vorgesehen, bevorzugt ist der Gerätefuß ein Gerätefuß einer Wärmepumpe. Die Wärmepumpe ist bevorzugt eine Luft/Wasser-Wärmepumpe und weiter bevorzugt zur Außenaufstellung vorgesehen und geeignet. Der Gerätefuß definiert eine Standrichtung durch ein Aufstellen des Gerätefußes, insbesondere eines Gerätefußes, der an einer Wärmepumpe befestigt ist. D.h. der Gerätefuß hat eine Aufstellfläche, die einer unteren Seite des Gerätefußes entspricht und mit einem Untergrund, auf den der Gerätefuß gestellt wird, bei Aufstellung der Wärmepumpe in Kontakt kommt. Weiter hat der Gerätefuß eine Verbindungsfläche, die einer oberen Seite des Gerätefußes entspricht und die zur Verbindung mit der Wärmepumpe vorgesehen ist und bei Verbindung mit der Wärmepumpe mit der Wärmepumpe in Kontakt kommt. Die untere Seite des Gerätefußes ist in der Standrichtung unterhalb der oberen Seite des Gerätefußes angeordnet.

Der Gerätefuß umfasst einen Fußteller und einen Fußsockel, wobei der Fußteller in der Standrichtung unterhalb des Fußsockels angeordnet ist. Der Fußteller umfasst eine Oberseite und eine in der Standrichtung unterhalb der Oberseite angeordnete Unterseite. Der Fußteller umfasst vorzugsweise eine Aufstellfläche des Gerätefußes, d.h. die Unterseite des Fußtellers entspricht bevorzugt der unteren Seite des Gerätefußes. Ein Querschnitt des Fußtellers ist in einer Ebene senkrecht zu der Standrichtung bevorzugt rechteckig ausgestaltet, wobei der Querschnitt des Fußtellers in der Ebene senkrecht zu der Standrichtung auch andere Formen aufweisen kann, wie zum Beispiel eine runde, ovale oder andere vieleckige Form als viereckig. Im Fall, dass der Querschnitt des Fußtellers Ecken aufweist, sind die Ecken bevorzugt abgerundet. Ein rechteckiger Querschnitt bedeutet hier, dass eine Grundform des Querschnitts rechteckig ist, wobei das den Querschnitt definierende Rechteck auch Aussparungen aufweisen kann. Gleiches gilt für einen runden, ovalen oder vieleckigen Querschnitt des Fußtellers, d.h. ein runder, ovaler oder vieleckiger Querschnitt bedeutet, dass eine Grundform des Querschnitts rund, oval oder vieleckig ist, wobei der den Querschnitt definierende Kreis, das den Querschnitt definierende Oval oder das den Querschnitt definierende Vieleck auch Aussparungen aufweisen kann.

Der Fußsockel umfasst eine Oberseite und eine in Standrichtung unterhalb der Oberseite des Fußsockels angeordnete Unterseite des Fußsockels. In einem Fall, in dem der Gerätefuß einstückig ausgestaltet ist, wie er in einer bevorzugten Ausführungsform ausgestaltet sein kann, entspricht die Unterseite des Fußsockels einem Teil der Oberseite des Fußtellers. Im Fall, dass der Gerätefuß alternativ zweistückig ausgestaltet ist, d.h. der Fußsockel und der Fußteller zwei einzelnen Stücken entsprechen, liegt die Unterseite des Fußsockels auf einem Teil der Oberseite des Fußtellers auf bzw. ist mit einem Teil der Oberseite des Fußtellers verbunden. Ein Querschnitt des Fußsockels senkrecht zu der Standrichtung ist bevorzugt rechteckig ausgestaltet, wobei der Querschnitt des Fußsockels in der Ebene senkrecht zu der Standrichtung auch andere Formen aufweisen kann, wie zum Beispiel eine runde, ovale oder andere vieleckige Form als viereckig. In einem Fall, in dem der Querschnitt des Fußsockels Kanten aufweist, sind die Kanten bevorzugt abgerundet. Ein rechteckiger Querschnitt bedeutet hier, dass eine Grundform des Querschnitts rechteckig ist, wobei das den Querschnitt definierende Rechteck auch Aussparungen aufweisen kann. Gleiches gilt für einen runden, ovalen oder vieleckigen Querschnitt des Fußtellers, d.h. ein runder, ovaler oder vieleckiger Querschnitt bedeutet, dass eine Grundform des Querschnitts rund, oval oder vieleckig ist, wobei der den Querschnitt definierende Kreis, das den Querschnitt definierende Oval oder das den Querschnitt definierende Vieleck auch Aussparungen aufweisen kann.

Eine Höhe des Fußsockels in Standrichtung ist bevorzugt an eine Breite eines Transportbandes angepasst, insbesondere kann an eine Außenseite des Gerätefußes bzw. des Fußsockels ein Transportband angelegt werden. Bevorzugt ist demnach eine Höhe einer Außenseite des Gerätefußes zum Anlegen eines Transportbandes ausgestaltet. Die Außenseite des Fußsockels entspricht wenigstens drei Seiten des Fußsockels, die den äußersten Rand des Fußsockels definieren. Eine Außenseite des Fußsockels ist bevorzugt glatt ausgestaltet, d.h. sie weist senkrecht zu der Standrichtung keine Vorsprünge auf.

Eine Höhe des Fußtellers in Standrichtung ist bevorzugt geringer als eine Höhe des Fußsockels in Standrichtung. Weiter ist der Gerätefuß bevorzugt spiegelsymmetrisch ausgestaltet, wobei bei einem spiegelsymmetrischen Gerätefuß wenigstens der Fußteller und der Fußsockel spiegelsymmetrisch sind, d.h. eine äußere Form des Gerätefußes spiegelsymmetrisch ist. Besonders bevorzugt sind alle Merkmale des Gerätefußes wie Bohrungen und/oder Aussparungen spiegelsymmetrisch angeordnet.

Der Fußteller weist eine Aussparung auf. Die Aussparung ist in einem Querschnitt senkrecht zu der Standrichtung vorzugsweise rechteckig oder nahezu rechteckig ausgestaltet, wobei auch eine trapezförmige oder andere Querschnittsform der Aussparung senkrecht zu der Standrichtung denkbar ist. "Nahezu rechteckig" bedeutet hier, dass Kanten von dem die Aussparung beschreibenden Rechteck abgerundet sein können. Der Querschnitt der Aussparung ist in der Standrichtung bevorzugt gleich, wobei der Querschnitt der Aussparung sich in Standrichtung auch verändern kann. Beispielsweise kann sich ein Querschnitt der Aussparung in der Standrichtung vergrößern. Die Aussparung des Fußtellers ist für eine Verbindung mit einem Untergrund vorgesehen, insbesondere ist die Aussparung vorgesehen, um den Gerätefuß mit dem Untergrund lösbar zu verbinden. Beispielsweise ist in einem Untergrund eine Gewindestange angebracht, dann ist die Aussparung vorgesehen, in einer Ebene senkrecht zu der Standrichtung um die Gewindestange positioniert zu werden, so dass zum Beispiel mit einer Gewindemutter der Gerätefuß mit dem Untergrund verbunden wird, insbesondere lösbar verbunden wird. Eine "lösbare Verbindung" wird hergestellt, wenn es sich bei verwendeten Befestigungsmitteln um Befestigungsmittel handelt, die zu einer lösbaren Verbindung vorgesehen und geeignet sind.

Die Aussparung ist in einer bevorzugten Ausführungsform so geformt, dass in einem Fall, in dem der Gerätefuß durch ein Befestigungsmittel mit einem Untergrund verbunden ist, der Fußteller das Befestigungsmittel senkrecht zu der Standrichtung von drei Seiten umgibt. Weiter ist bevorzugt, dass die Aussparung so geformt ist, dass in einem Fall, in dem der Gerätefuß mit einem Untergrund verbunden ist, der Gerätefuß durch einen Kraftschluss mit dem Untergrund verbunden ist.

Auch der Fußsockel kann eine Aussparung aufweisen, wobei eine Aussparung des Fußsockels einem Teilschnitt eines Zylinders entsprechen kann. Eine Aussparung des Fußsockels hat den Vorteil, dass der Fußsockel weniger Platz auf einer Oberseite des Fußtellers einnimmt und somit Bereiche des Fußtellers für weitere Merkmale vorgesehen sein können, zum Beispiel eine Dichtungsbohrung (s. unten).

Eine Ausdehnung des Fußtellers senkrecht zu der Standrichtung ist zumindest in eine Richtung senkrecht zu der Standrichtung größer als eine Ausdehnung des Fußsockels senkrecht zu der Standrichtung. Das bedeutet, dass eine Fläche eines Querschnitts des Gerätefußes in Standrichtung größer wird. Anders ausgedrückt überragt der Fußteller den Fußsockel senkrecht zu der Standrichtung in wenigstens einer Richtung. Bei Anlegen eines Transportbandes an den Fußsockel kann so ein Verrutschen des Transportbandes verhindert oder zumindest verringert werden.

Der Fußteller weist wenigstens eine zu der Standrichtung schräg verlaufende Fixierungsbohrung auf. Bei der Fixierungsbohrung handelt es sich bevorzugt um eine glatte Bohrung, d.h. eine Bohrung mit glatten Innenwänden, alternativ kann auch, d.h. ein Außengewinde an den Innenwänden, vorgesehen sein. Die Fixierungsbohrung führt bevorzugt in Standrichtung in der gesamten Höhe des Fußtellers durch den Fußteller. Weiter bevorzugt ist die Fixierungsbohrung rund ausgestaltet, d.h. ein Volumen, welches durch die Wände der Fixierungsbohrung umschlossen wird, wird durch einen Kreiszylinder beschrieben. Alternativ kann die Fixierungsbohrung beispielsweise auch oval ausgestaltet sein, d.h. ein Volumen, welches durch die Wände der Fixierungsbohrung umschlossen wird, wird durch einen elliptischen Zylinder beschrieben. Im Fall, dass der Gerätefuß zwei oder mehrere Fixierungsbohrungen aufweist, sind die Fixierungsbohrungen (bis auf ihre räumliche Ausrichtung) gleich ausgestaltet.

Die Fixierungsbohrung, d.h. jeder der wenigstens einen Fixierungsbohrung, ist schräg zu der Standrichtung ausgestaltet. Hierunter versteht der Fachmann, dass sich eine Position einer Öffnung, die durch die Fixierungsbohrung in einer Ebene senkrecht zu der Standrichtung beschrieben wird, von einer Oberseite des Fußtellers zu einer Unterseite des Fußtellers in der Ebene senkrecht zu der Standrichtung verändert, insbesondere stetig verändert. In einem Fall, in dem der Gerätefuß spiegelsymmetrisch ausgestaltet ist, d.h. in dem eine Symmetrieebene parallel zu der Standrichtung definiert werden kann, verändert sich eine Position der Öffnung, die durch die Fixierungsbohrung in einer Ebene senkrecht zu der Standrichtung beschrieben wird, von einer Oberseite des Fußtellers zu einer Unterseite des Fußtellers in der Ebene senkrecht zu der Standrichtung stetig in Richtung der Symmetrieebene. Die schräg angeordnete Fixierungsbohrung ermöglicht ein (temporäres) Fixieren des Gerätefußes von einer Seite des Gerätefußes her, d.h. auch in einem Fall, in dem der Gerätefuß an einer Wärmepumpe, insbesondere einer Bodenplatte der Wärmepumpe, befestigt ist.

In einer vorteilhaften Ausgestaltung eines Aspekts der Erfindung ist die Ausdehnung des Fußtellers senkrecht zu der Standrichtung in allen Richtungen größer als die Ausdehnung des Fußsockels senkrecht zu der Standrichtung. Das bedeutet, dass ein Querschnitt des Gerätefußes in Standrichtung in allen Richtungen senkrecht zu der Standrichtung größer wird oder anders ausgedrückt der Fußteller den Fußsockel senkrecht zu der Standrichtung in allen Richtungen überragt. Dadurch kann ein Verrutschen eines Tragegurtes, der an dem Fußsockel angelegt wird, weiter verhindert oder zumindest verringert werden.

Eine schräg verlaufende Fixierungsbohrung kann bevorzugt folgendermaßen definiert werden: Parallel zu der Standrichtung wird eine Schnittebene definiert, wobei der Fußteller eine erste Seite auf einer ersten Seite der Schnittebene und eine der ersten Seite gegenüberliegende zweite Seite auf einerzweiten Seite der Schnittebene, die sich von der ersten Seite unterscheidet, aufweist. Eine derart definierte Schnittebene schneidet also parallel zu der Standrichtung den Gerätefuß, insbesondere den Fußteller des Gerätefußes. Die schräg angeordnete Fixierungsbohrung ist auf der ersten Seite oder der zweiten Seite des Fußtellers angeordnet, wobei im Fall, dass der Fußteller zwei Fixierungsbohrungen aufweist, eine erste der zwei Fixierungsbohrungen auf der ersten Seite des Fußtellers angeordnet ist und eine zweite der zwei Fixierungsbohrungen auf der zweiten Seite des Fußtellers angeordnet ist. Die Fixierungsbohrung bzw. jede der wenigstens einen Fixierungsbohrungen definiert jeweils eine Gerade, wobei eine durch eine Fixierungsbohrung definierte Gerade durch eine Mittelachse der Fixierungsbohrung entlang der Bohrung führt. Eine Fixierungsbohrung ist eine schräg verlaufende Fixierungsbohrung, wenn die dazugehörig definierte Gerade die Schnittebene in einem Bereich schneidet, der in der Standrichtung unterhalb des Fußtellers liegt.

In einer weiteren bevorzugten Ausführungsform wird eine Ausdehnung des Fußtellers senkrecht zu der Standrichtung in die Standrichtung zumindest teilweise größer. "Teilweise größer" bedeutet hier, dass die Ausdehnung des Fußtellers senkrecht zu der Standrichtung in Standrichtung auch teilweise gleich bleiben kann. Alternativ kann eine Ausdehnung des Fußtellers senkrecht zu der Standrichtung in Standrichtung auch durchgehend größer werden, wobei "durchgehend größer" bedeutet, dass die Ausdehnung des Fußtellers senkrecht zu der Standrichtung in Standrichtung nicht teilweise gleich bleibt.

In einer weiteren bevorzugten Ausführungsform umfasst der Fußteller einen abgeschrägten Bereich, wobei die wenigstens eine Fixierungsbohrung in dem abgeschrägten Bereich des Fußtellers angeordnet ist. Der abgeschrägte Bereich ist zu einer Unterseite des Fußtellers und einer Außenseite des Fußtellers abgeschrägt. Insbesondere kann der abgeschrägte Bereich wie folgt definiert werden: Eine Normale, die auf einer Oberfläche des abgeschrägten Bereichs senkrecht angeordnet ist, schneidet eine Schnittebene, wie sie oben definiert ist, in einem Bereich, der in der Standrichtung unterhalb des Fußtellers liegt.

In einer bevorzugten Variante der obigen Ausführungsform steht eine Gerade, die durch eine der wenigstens einen Fixierungsbohrung definiert wird, senkrecht zu einer Ebene, die durch eine an der Oberseite des Fußtellers befindliche Öffnung der wenigstens einen Fixierungsbohrung definiert wird. Insbesondere wird die Ebene durch den Rand der an der Oberseite des Fußtellers befindlichen Öffnung definiert. Dadurch ist in einem Fall, in dem ein Volumen, das durch die Fixierungsbohrung eingeschlossen ist, durch einen Kreiszylinder definiert wird, die an der Oberseite des Fußtellers befindliche Öffnung kreisförmig.

In einer weiteren bevorzugten Variante einer der obigen Ausführungsformen verläuft der abgeschrägte Bereich zumindest an einer äußeren Kante des Fußtellers. Dabei kann die bevorzugte Variante vorteilhaft derart ausgestaltet sein, dass der abgeschrägte Bereich zumindest an einer äußeren Kante der Oberseite des Fußtellers verläuft.

Der abgeschrägte Bereich bringt den Vorteil, dass ein (temporäres) Fixieren des Gerätefu-ßes mit Hilfe der Fixierungsbohrung von einer Seite des Gerätefußes, d.h. auch in einem Fall, in dem der Gerätefuß an einer Wärmepumpe, insbesondere einer Bodenplatte der Wärmepumpe, befestigt ist, weiter vereinfacht wird.

In einer weiteren Ausgestaltung eines Aspekts der Erfindung weist der Fußteller eine Dämpferbohrung zur Aufnahme eines Dämpfers auf. Bevorzugt ist die Dämpferbohrung in einem mittleren Bereich des Fußtellers angeordnet, wobei der mittlere Bereich einem Bereich der Oberseite des Fußtellers entspricht, der um eine Mittelachse parallel zu der Standrichtung angeordnet ist und höchstens 70 % einer gesamten Oberfläche der Oberseite, besonders bevorzugt höchstens 50 % der gesamten Oberfläche entspricht.

In einer weiteren Ausgestaltung eines Aspekts der Erfindung weist der Fußsockel wenigstens eine Befestigungsbohrung, bevorzugt zwei Befestigungsbohrungen, zur lösbaren Befestigung des Gerätefußes an der Wärmepumpe auf. Die Befestigungsbohrung führt bevorzugt über eine gesamte Höhe des Fußsockels in Standrichtung durch den Gerätefuß. Vorzugsweise sind Innenwände der Befestigungsbohrungen glatt ausgestaltet, wobei die Innenwände der Befestigungsbohrungen alternativ jeweils auch ein Außengewinde aufweisen können. Bevorzugt umfasst jede der wenigstens einen Befestigungsbohrung wenigstens zwei unterschiedliche Durchmesser. Insbesondere verläuft jede der Befestigungsbohrungen parallel zu der Standrichtung, wobei dann ein Durchmesser senkrecht zu der Standrichtung an zwei unterschiedlichen Höhenbereichen der Befestigungsbohrung entlang der Standrichtung unterschiedlich ist. Die Innenwände der Befestigungsbohrungen an den zwei unterschiedlichen Höhenbereichen können dabei gleich oder unterschiedlich ausgestaltet sein. Bevorzugt sind die Innenwände der Befestigungsbohrungen an den zwei unterschiedlichen Höhenbereichen glatt ausgestaltet, wobei alternativ auch ein Außengewinde an einem der beiden unterschiedlichen Höhenbereichen oder beiden Höhenbereichen vorliegen kann. Durch einen unterschiedlichen Durchmesser in den Befestigungsbohrungen kann ein Befestigungsmittel wie eine Schraube von einer Unterseite des Gerätefu-ßes in die Befestigungsbohrung eingeführt werden und den Gerätefuß bei Befestigen des Befestigungsmittels an einer Wärmepumpe, insbesondere einer Bodenplatte der Wärmepumpe, an der Wärmepumpe, insbesondere der Bodenplatte der Wärmepumpe, halten.

In einer weiteren Ausgestaltung eines Aspekts der Erfindung weist der Fußsockel einen Haken zur Positionierung des Gerätefußes an der Wärmepumpe auf. Insbesondere ist der Haken an der Oberseite des Fußsockels angeordnet. Der Haken weist bevorzugt in einer Ebene senkrecht zu der Standrichtung zumindest teilweise eine Asymmetrie auf, so dass der Haken nur in einer vordefinierten Orientierung oder in wenigen vordefinierten Orientierungen, zum Beispiel zwei oder drei vordefinierten Orientierungen, in eine zu dem Haken orientierente Vertiefung der Wärmepumpe, insbesondere der Bodenplatte der Wärmepumpe, eingefügt werden kann. Insbesondere ist der Haken senkrecht zu der Standrichtung eckig, besonders bevorzugt viereckig ausgestaltet. Zusätzlich oder alternativ weist der Haken ein Rastmittel zum Verrasten in ein zu dem Rastmittel komplementäres Rastmittel an der Wärmepumpe, insbesondere der Bodenplatte der Wärmepumpe, auf. Der Haken ermöglicht ein richtiges Positionieren des Gerätefußes zu der Wärmepumpe, insbesondere einer Bodenplatte der Wärmepumpe, und dann ein einfaches Befestigen des Gerätefußes an der Wärmepumpe, insbesondere der Bodenplatte der Wärmepumpe, bevorzugt mit Hilfe der oben beschriebenen Befestigungsbohrungen.

Wie oben bereits angegeben, ist der Gerätefuß bevorzugt einstückig ausgestaltet, wobei der Gerätefuß weiter bevorzugt als ein Druckgussteil, besonders bevorzugt als Zinkdruckgussteil, hergestellt wird.

In einer weiteren vorteilhaften Ausgestaltung eines Aspekts der Erfindung weist der Fußsockel in Standrichtung ein höhenverstellbares Element auf, wobei der Fußsockel bevorzugt ein Gewinde mit wenigstens einem Gewindekörper aufweist, der gegenüber dem Gewinde in Standrichtung verstellbar ist. Ein höhenverstellbares Element ermöglicht nach Aufstellen einer Wärmepumpe auf die Gerätefüße und nach Befestigen der Gerätefüße an einen Untergrund wie einen Standsockel ein Ausrichten der Wärmepumpe.

Die Erfindung bezieht sich weiter auf eine Bodenplatte für eine Wärmepumpe mit vier Gerätefüßen nach einer der obigen Ausgestaltungen, wobei die vier Gerätefüße bevorzugt gleich, d.h. identisch, ausgestaltet sind. Die Gerätefüße sind derart zueinander ausgerichtet, dass die vier Gerätefüße, insbesondere die Aussparungen der vier Gerätefüße an dem jeweiligen Fußteller, senkrecht zu der Standrichtung in dieselbe Richtung zeigen. Dies ermöglicht ein Abstellen der Wärmepumpe auf dem Untergrund und ein Positionieren, insbesondere Schieben ohne oder nur leichtem Anheben der Wärmepumpe, der Gerätefüße in einer Ebene senkrecht zu der Standrichtung um ein jeweiliges Befestigungsmittel.

In einer bevorzugten Ausführungsform der Bodenplatte ist eine Fläche senkrecht zu der Standrichtung, die durch eine Ausdehnung der vier Gerätefüße senkrecht zu der Standrichtung und durch Zwischenbereiche zwischen den vier Gerätefüßen senkrecht zu der Standrichtung definiert ist, durch eine maximale Ausdehnung der Bodenplatte senkrecht zu der Standrichtung begrenzt. Anders ausgedrückt befinden sich die vier Gerätefüße bevorzugt in einem Footprint der Bodenplatte, d.h. eine Projektion der Gerätefüße in einer Projektionsebene senkrecht zu der Standrichtung liegt innerhalb einer Projektion der Bodenplatte in der Projektionsebene. Alternativ kann auch eine Fläche senkrecht zu der Standrichtung, die durch eine Ausdehnung von zwei der vier Gerätefüße senkrecht zu der Standrichtung und durch einen Zwischenbereich zwischen den zwei Gerätefüßen senkrecht zu der Standrichtung definiert ist, durch eine maximale Ausdehnung der Bodenplatte senkrecht zu der Standrichtung begrenzt sein, d.h. die Projektion von zwei der vier Gerätefüße in einer Projektionsebene innerhalb der Projektion der Bodenplatte in der Projektionsebene liegen.

Die Erfindung bezieht sich zudem auf eine Wärmepumpe mit einer Bodenplatte nach einer der genannten Ausführungsformen, d.h. einer Bodenplatte, die vier Gerätefüße nach einer der obigen Ausgestaltungen aufweist, wobei die vier Gerätefüße bevorzugt gleich, d.h. identisch, ausgestaltet sind.

Erfindungsgemäß wird nach einem zweiten Aspekt ein Verfahren zum Transport einer Wärmepumpe vorgeschlagen, wie es in Anspruch 23 definiert ist, nämlich ein Verfahren zum Transport einer Wärmepumpe mit einer Bodenplatte, wobei die Bodenplatte vier Gerätefüße aufweist, wobei jeder der vier Gerätefüße einen Fußteller und einen Fußsockel umfasst und durch Aufstellung eine Standrichtung definiert, wobei das Verfahren die Schritte aufweist: (i) Aufstellen der Wärmepumpe durch Aufstellen der Gerätefüße auf eine Transportunterlage, (ii) Fixieren der Wärmepumpe durch Fixieren der Gerätefüße an der Transportunterlage mit Hilfe wenigstens eines Befestigungsmittels, bevorzugt einer Schraube, wobei das Befestigungsmittel durch eine Fixierungsbohrung des Fußtellers geführt wird, wobei die Fixierungsbohrung zu der Standrichtung schräg verläuft, (iii) Transportieren der Transportunterlage in Richtung eines Aufstellsockels, d.h. insbesondere eines Aufstellungsortes, also eines endgültigen Aufstellungsortes, der Wärmepumpe, (iv) Lösen des wenigstens einen Befestigungsmittels, (v) Positionieren wenigstens eines Transportbandes an den vier Gerätefüßen, wobei eine Ausdehnung des Fußtellers senkrecht zu der Standrichtung zumindest in eine Richtung größer ist als eine Ausdehnung des Fußsockels senkrecht zu der Standrichtung, um ein Verrutschen des Transportbandes in Standrichtung zu verhindern und (vi) Transportieren der Wärmepumpe mit Hilfe des wenigstens einen Transportbandes zu einem Aufstellsockel der Wärmepumpe.

Erfindungsgemäß wird nach einem dritten Aspekt ein Verfahren zur Montage einer Wärmepumpe vorgeschlagen, wie es in Anspruch 24 definiert ist, nämlich ein Verfahren zur Montage einer Wärmepumpe mit einer Bodenplatte, wobei die Bodenplatte vier Gerätefüße aufweist, wobei jeder der vier Gerätefüße einen Fußteller und einen Fußsockel umfasst und durch Aufstellung eine Standrichtung definiert, wobei das Verfahren die Schritte aufweist: (i) Einbringen von weiteren Befestigungsmitteln, bevorzugt Gewindestangen, in einen Aufstellsockel, (ii) Aufstellen der Wärmepumpe durch Aufstellen der Gerätefüße auf den Aufstellsockel und Positionieren der Gerätefüße um die weiteren Befestigungsmittel, so dass jeder Fußteller ein weiteres Befestigungsmittel senkrecht zu der Standrichtung von drei Seiten umgibt, und (iii) Befestigen der Wärmepumpe durch Befestigen der Gerätefüße an dem Aufstellsockel mit Hilfe von an den weiteren Befestigungsmitteln zu befestigenden Gegenbefestigungsmitteln, bevorzugt Gewindemuttern, so dass in Standrichtung zwischen jedem der Gerätefüße und dem Aufstellsockel ein Kraftschluss entsteht.

Bevorzugt umfasst das Verfahren zur Montage einer Wärmepumpe vor dem Schritt eines Aufstellens der Wärmepumpe die Schritte: Positionieren wenigstens eines Transportbandes an den vier Gerätefüßen, wobei eine Ausdehnung des Fußtellers senkrecht zu der Standrichtung zumindest in eine Richtung größer ist als eine Ausdehnung des Fußsockels senkrecht zu der Standrichtung, um ein Verrutschen des Transportbandes in Standrichtung zu verhindern und Transportieren der Wärmepumpe mit Hilfe des wenigstens einen Transportbandes zu einem Aufstellsockel der Wärmepumpe.

In einer weiteren bevorzugten Ausführungsform einer der erfindungsgemäßen Verfahren weist das Verfahren die weiteren Schritte auf: (i) Positionieren der vier Gerätefüße an der Bodenplatte der Wärmepumpe mit Hilfe von Haken, die an jedem der vier Fußsockel der vier Gerätefüße angeordnet sind, (ii) Führen von Befestigungsmitteln, bevorzugt Schrauben, durch den Fußsockel, wobei der Fußsockel Befestigungsbohrungen zum Führen der Befestigungsmittel aufweist, und (iii) Befestigen der Gerätefüße an der Bodenplatte durch Befestigen der Befestigungsmittel an der Bodenplatte.

Die erfindungsgemäßen Verfahren können auch in Kombination durchgeführt werden, d.h. die Erfindung betrifft auch ein Verfahren zum Transport und zur Montage einer Wärmepumpe mit den oben genannten Schritten. Die Schritte können dabei teilweise in anderer Reihenfolge durchgeführt werden, als oben angegeben.

Merkmale vorteilhafter Ausführungsformen der Erfindung sind insbesondere in den Unteransprüchen definiert, wobei weitere vorteilhafte Merkmale, Ausführungen und Ausgestaltungen für den Fachmann zudem aus den obigen Erläuterung und der folgenden Diskussion zu entnehmen sind.

Im Folgenden wird die vorliegende Erfindung anhand von in den Figuren dargestellten Ausführungsbeispielen weiter illustriert und erläutert. Hierbei zeigt
- Fig. 1: eine schematische Darstellung zur Illustration eines ersten Ausführungsbeispiels des Gerätefußes,
- Fig. 2: eine schematische Darstellung zur Illustration des ersten Ausführungsbeispiels des Gerätefußes aus einer anderen Perspektive,
- Fig. 3: eine schematische Darstellung zur Illustration eines ersten Ausführungsbeispiels der Bodenplatte,
- Fig. 4: eine schematische Darstellung zur Illustration des ersten Ausführungsbeispiels der Bodenplatte aus einer anderen Perspektive,
- Fig. 5: eine schematische Darstellung zur Illustration eines ersten Ausführungsbeispiels des erfindungsgemäßen Verfahrens zum Transport einer Wärmepumpe und
- Fig. 6: eine schematische Darstellung zur Illustration eines ersten Ausführungsbeispiels des erfindungsgemäßen Verfahrens zur Montage einer Wärmepumpe.

In den beiliegenden Zeichnungen sowie den Erläuterungen zu diesen Zeichnungen sind einander entsprechende bzw. in Beziehung stehende Elemente - soweit zweckdienlich - mit jeweils entsprechenden oder ähnlichen Bezugszeichen gekennzeichnet, auch wenn sie in unterschiedlichen Ausführungsbeispielen zu finden sind.

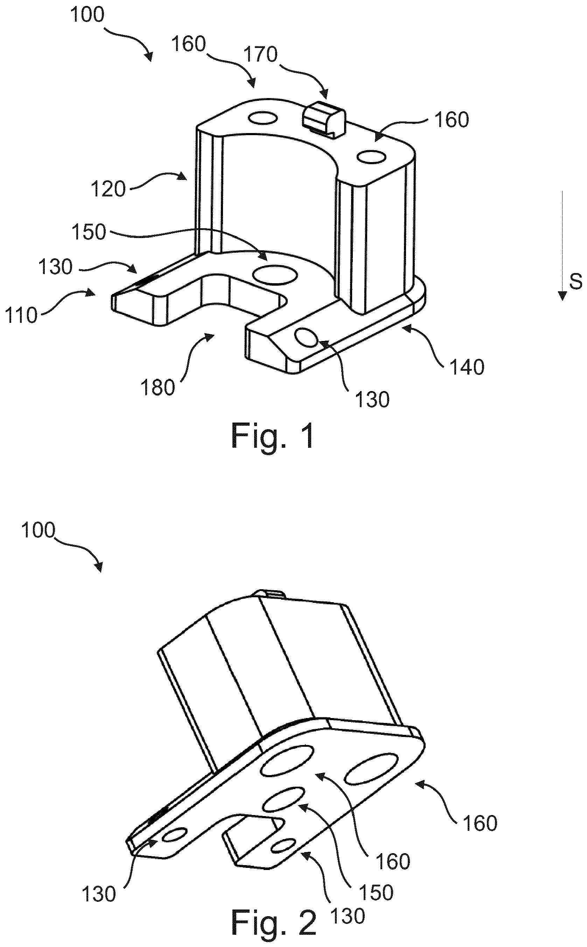

Fig. 1 zeigt eine schematische Darstellung zur Illustration eines ersten Ausführungsbeispiels des Gerätefußes. Der Gerätefuß 100 ist für eine Wärmepumpe vorgesehen. Der Gerätefuß 100 umfasst einen Fußteller 110 und einen Fußsockel 120. Durch den Gerätefuß 100 wird eine Standrichtung S definiert, die in Fig. 1 nach unten gerichtet ist. Der Fußteller 110 ist in Standrichtung S unterhalb des Fußsockels 120 angeordnet. Der Fußteller 110 entspricht in der gezeigten Ausführungsform einer rechteckigen Platte, die teilweise abgerundete Kanten aufweist. Insbesondere weist der Fußteller 110 eine Oberseite und eine in Standrichtung S unterhalb der Oberseite angeordnete Unterseite auf. Der Fußsockel 120 entspricht im Wesentlichen einem Quader, der teilweise abgerundete Kanten aufweist. In der vorliegenden Ausführungsform weist der Quader auf einer Seite eine Aussparung auf, die einem Teilschnitt eines Zylinders entspricht. Der Gerätefuß 100 ist in der gezeigten Ausführungsform zu einer Ebene parallel zu der Standrichtung spiegelsymmetrisch aufgebaut.

Der Fußteller 110 weist auf einer Seite eine Aussparung 180 auf, um mit einem Untergrund lösbar verbunden zu werden. In der gezeigten Ausführungsform ist ein Querschnitt der Aussparung 180 senkrecht zu der Standrichtung S im Wesentlichen rechteckig, wobei "im Wesentlichen rechteckig" bedeutet, dass das durch den Querschnitt definierte Rechteck auch abgerundete Kanten aufweisen kann, wie im vorliegenden Beispiel zu erkennen. Eine Ausdehnung des Fußtellers 110 senkrecht zu der Standrichtung S ist zumindest in einer Richtung größer als eine Ausdehnung des Fußsockels 120 senkrecht zu der Standrichtung S. Insbesondere ist in der gezeigten Ausführungsform die Ausdehnung des Fußtellers 110 senkrecht zu der Standrichtung S in allen Richtungen senkrecht zu der Standrichtung S größer als die Ausdehnung des Fußsockels 120 senkrecht zu der Standrichtung S.

Der Fußteller 110 weist wenigstens eine zu der Standrichtung S schräg verlaufende Fixierungsbohrung 130 auf. Insbesondere weist der Fußteller 110 in der gezeigten Ausführungsform zwei zu der Standrichtung S schräg verlaufende Fixierungsbohrungen 130 auf.

Parallel zu der Standrichtung S wird eine Schnittebene definiert, wobei der Fußteller 110 eine erste Seite auf einer ersten Seite der Schnittebene und eine der ersten Seite gegenüberliegende zweite Seite auf einer zweiten Seite der Schnittebene, die sich von der ersten Seite unterscheidet, aufweist. Die Schnittebene kann einer Spiegelsymmetrieebene entsprechen, wenn der Gerätefuß spiegelsymmetrisch ist. Im Fall von zwei Fixierungsbohrungen 130 sind die Fixierungsbohrungen 130 bevorzugt jeweils auf der ersten Seite und der zweiten Seite der Schnittebene bzw. der Spiegelsymmetrieebene angeordnet. Damit sind die zwei Fixierungsbohrungen 130 jeweils auf einer ersten Seite und einer zweiten Seite des Fußtellers 110 angeordnet. Durch jede der zwei Fixierbohrungen 130 wird eine Gerade definiert, wobei jede der Geraden die Schnittebene in einem Bereich schneidet, der in der Standrichtung S unterhalb des Fußtellers 110 liegt.

In der gezeigten Ausführungsform wird eine Ausdehnung des Fußtellers 110 senkrecht zu der Standrichtung S in Richtung der Standrichtung S zumindest teilweise größer. Insbesondere umfasst der Fußteller 110 in der gezeigten Ausführungsform einen abgeschrägten Bereich 140, der in der gezeigten Ausführungsform an drei Seiten des Fußtellers 110 angeordnet ist, wobei an der vierten Seite des Fußtellers 110 die Aussparung 180 vorgesehen ist. Der abgeschrägte Bereich 140 verläuft an einer äußeren Kante des Fußtellers 110, insbesondere einer äußeren Kante der Oberseite des Fußtellers 110. Die Fixierungsbohrungen 130 sind in der vorliegenden Ausführungsform in dem abgeschrägten Bereich 140 angeordnet. Anders ausgedrückt steht eine Gerade, die durch eine der Fixierungsbohrungen 130 definiert wird, senkrecht zu einer Ebene, die durch eine an der Oberseite des Fußtellers 110 befindliche Öffnung der jeweiligen Fixierungsbohrung 130, insbesondere einem Rand der jeweiligen Öffnung, definiert wird.

Weiter weist der gezeigte Gerätefuß 100 eine Dämpferbohrung 150 auf. Die Dämpferbohrung 150 ist zur Aufnahme eines Dämpfers vorgesehen, der in Fig. 1 nicht gezeigt ist. Der Dämpfer kann von unten in den Gerätefuß 100, insbesondere in die Dämpferbohrung 150 des Gerätefußes 100, gesteckt werden und sorgt so für eine Schwingungsentkopplung des Gerätefußes 100 zum Untergrund.

Zudem weist der Gerätefuß 100 in der gezeigten Ausführungsform wenigstens eine Befestigungsbohrung 160, insbesondere zwei Befestigungsbohrungen 160, auf. Die Befestigungsbohrungen 160 sind zur lösbaren Befestigung des Gerätefußes 100 an einer Wärmepumpe, insbesondere einer Bodenplatte der Wärmepumpe, vorgesehen.

Weiter ist in Fig. 1 ein Haken 170 am Fußsockel 120, insbesondere der Oberseite des Fußsockels 120, zu erkennen. Der Haken 170 ist zur Positionierung des Gerätefußes 100 an der Wärmepumpe, insbesondere einer Bodenplatte der Wärmepumpe, vorgesehen. In der gezeigten Ausführungsform ist der Haken 170 senkrecht zu der Standrichtung S eckig, insbesondere viereckig, ausgestaltet. Dies ermöglicht ein vordefiniertes Einstecken des Hakens 170 in eine Vertiefung der Wärmepumpe, insbesondere der Bodenplatte der Wärmepumpe. Weiter weist der Haken 170 Rastmittel zum Verrasten des Hakens 170 in einer Wärmpumpe, insbesondere einer Bodenplatte der Wärmepumpe, auf. Der Haken 170 kann insbesondere so ausgestaltet sein, dass der Gerätefuß 100 nur in einer vordefinierten Position eingesteckt werden kann, d.h. der Haken 170 weist in einem Querschnitt senkrecht zu der Standrichtung S keine Symmetrie auf. Der Haken 170 ermöglicht ein (Vor-)Positionieren des Gerätefußes 100 gegenüber der Wärmepumpe, insbesondere der Bodenplatte der Wärmepumpe, wobei danach der Gerätefuß 100 mit Hilfe von Befestigungsmitteln, wie Schrauben, durch die Befestigungsbohrungen 160 befestigt werden kann.

Erfindungsgemäß umfasst der Gerätefuß 100, insbesondere der Fußteller 110, die Aussparung 180. Die Aussparung 180 ist so geformt, dass im Fall, dass der Gerätefuß 100 mit dem Untergrund durch ein Befestigungsmittel, z.B. Schrauben oder Gewindestangen, verbunden ist, der Fußteller 110 das Befestigungsmittel senkrecht zu der Standrichtung S von drei Seiten umgibt. Bevorzugt ist die Aussparung 180 so dimensioniert, dass kein direkter Kontakt zwischen der Aussparung 180 und dem Befestigungsmittel besteht. Die Aussparung 180 ist so geformt, dass im Fall, dass der Gerätefuß 100 mit dem Untergrund verbunden ist, der Gerätefuß 100 durch einen Kraftschluss, der in Standrichtung S wirkt und z.B. durch eine Gewindemutter hergestellt werden kann, mit dem Untergrund verbunden ist.

Der gezeigte Gerätefuß 100 ist einstückig ausgestaltet und wird bevorzugt als Druckgussteil, z.B. Zinkdruckgussteil, hergestellt. Weiter kann der Fußsockel 120 ein höhenverstellbares Element umfassen, welches in Fig. 1 nicht dargestellt ist. Das höhenverstellbare Element kann beispielsweise ein Gewinde entlang der Standrichtung S umfassen und einen Gewindekörper, der gegenüber dem Gewinde in der Standrichtung S verstellbar ist. Durch ein höhenverstellbares Element kann eine Höhe des Gerätefußes nach Befestigung des Gerätefußes an der Wärmepumpe, insbesondere der Bodenplatte der Wärmepumpe, und des Gerätefußes an einem Untergrund verstellt werden, d.h. ein Abstand zwischen Bodenplatte bzw. Wärmepumpe und Untergrund kann verstellt werden.

Fig. 2 zeigt eine schematische Darstellung zur Illustration des ersten Ausführungsbeispiels des Gerätefußes aus einer anderen Perspektive. Insbesondere ist in Fig. 2 der Gerätefuß 100 von unten zu sehen, d.h. es ist eine Unterseite des Gerätefußes bzw. eine Aufstellfläche des Gerätefußes gezeigt. Dabei sind auch die schräg angeordneten Fixierbohrungen 130, die Dämpferbohrung 150 und die Befestigungsbohrungen 160 von unten zu erkennen. In der gezeigten Ausführungsform weist die Befestigungsbohrung 160 jeweils wenigstens zwei unterschiedliche Durchmesser auf. Dadurch kann von unten eine Schraube in die Befestigungsbohrungen 160 eingeführt werden und mit einer Wärmepumpe, insbesondere einer Bodenplatte der Wärmepumpe, verbunden werden und damit den Gerätefuß 100 an der Wärmepumpe, insbesondere der Bodenplatte, halten.

Die Bohrungen können jeweils glatte Wände umfassen oder ein Außengewinde umfassen.

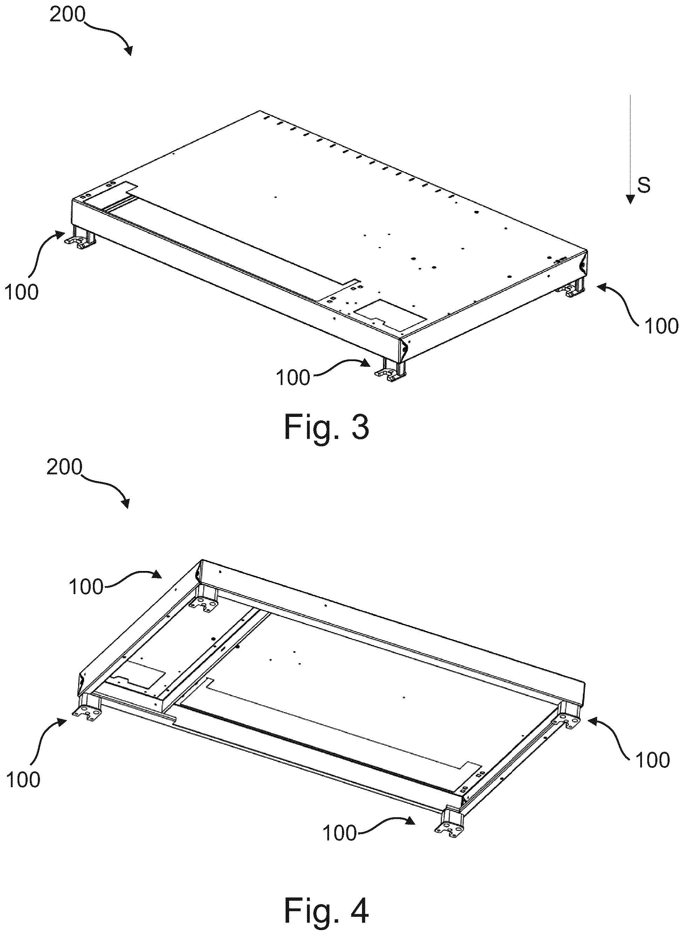

Fig. 3 zeigt eine schematische Darstellung zur Illustration eines ersten Ausführungsbeispiels einer Bodenplatte. Die Bodenplatte 200 ist für eine Wärmepumpe vorgesehen und umfasst vier Gerätefüße 100, wobei in Fig. 3 nur drei Gerätefüße 100 zu sehen sind. Die vier Gerätefüße 100 sind bevorzugt gleich, d.h. identisch, ausgestaltet. Die vier Gerätefüße 100 sind derart zueinander ausgerichtet, das die vier Gerätefüße 100, insbesondere die Aussparungen 180 der vier Gerätefüße 100, senkrecht zu der Standrichtung S in dieselbe Richtung zeigen. Definiert man die Seite des Gerätefußes 100, die die Aussparung 180 aufweist, als eine Rückseite des Gerätefußes 100, zeigt die Rückseite des Gerätefußes bevorzugt in dieselbe Richtung wie eine Rückseite der Bodenplatte 200, insbesondere einer Rückseite einer Wärmepumpe, die auf der Bodenplatte 200 befestigt ist.

In der gezeigten Ausführungsform sind zwei der Gerätefüße 100, insbesondere die zwei nicht an der Rückseite angeordneten Gerätefüße 100, in der Standrichtung S vollständig unterhalb der Bodenplatte 200 angeordnet. Alternativ können auch alle vier Gerätefüße 100 in der Standrichtung S vollständig unterhalb der Bodenplatte angeordnet sein. "Vollständig unterhalb" bedeutet, dass eine Fläche senkrecht zu der Standrichtung S, die durch eine Ausdehnung des Gerätefußes 100 senkrecht zu der Standrichtung S und durch Zwischenbereiche zwischen den Gerätefüßen 100 senkrecht zu der Standrichtung S definiert ist, durch eine maximale Ausdehnung der Bodenplatte senkrecht zu der Standrichtung S begrenzt ist.

Fig. 4 zeigt eine schematische Darstellung zur Illustration des ersten Ausführungsbeispiels der Bodenplatte aus einer anderen Perspektive. Insbesondere wird in Fig. 4 eine untere Seite der Bodenplatte 200 gezeigt. Die Bodenplatte 200 weist vier Gerätefüße 100 auf, wobei die vier Gerätefüße 100 an den Ecken der Bodenplatte 200 befestigt sind, insbesondere durch Befestigungsmittel, die durch die Befestigungsbohrungen 160 geführt werden.

Die Bodenplatte 200 weist demnach in jeder Ecke wenigstens zwei Bohrlöcher für jeden Gerätefuß 100 auf, z.B. mit einem Außengewinde, die die Befestigungsmittel, die durch die Befestigungsbohrungen 160 geführt werden, aufnehmen. Weiter weist die Bodenplatte 200 bevorzugt eine Vertiefung auf, um den Haken 170 zur Positionierung des Gerätefußes 100 gegenüber der Bodenplatte 200 aufzunehmen.

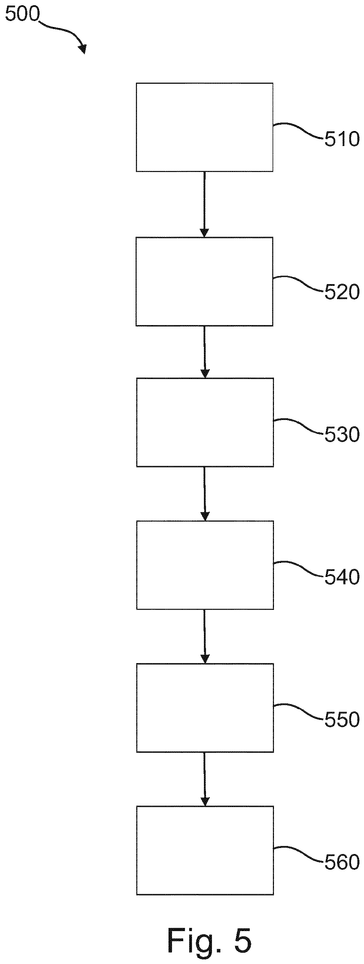

Fig. 5 zeigt eine schematische Darstellung zur Illustration eines ersten Ausführungsbeispiels des erfindungsgemäßen Verfahrens zum Transport einer Wärmepumpe. Die zu transportierende Wärmepumpe weist eine Bodenplatte auf, wobei die Bodenplatte vier Gerätefüße aufweist, wobei jeder der Gerätefüße einen Fußteller und einen Fußsockel umfasst und durch Aufstellung der Gerätefüße bzw. der Wärmepumpe eine Standrichtung definiert. In einem ersten Schritt 510 des Verfahrens 500 wird eine Wärmepumpe durch Aufstellen der Gerätefüße auf eine Transportunterlage aufgestellt. Die Transportunterlage kann zum Beispiel eine Holzpalette sein. In einem zweiten Schritt 520 wird die Wärmepumpe durch Fixieren der Gerätefüße an der Transportunterlage mit Hilfe wenigstens eines Befestigungsmittels, bevorzugt einer Schraube, fixiert, wobei das Befestigungsmittel durch eine Fixierungsbohrung des Fußtellers geführt wird, wobei die Fixierungsbohrung zu der Standrichtung des Gerätefußes schräg verläuft. In einem dritten Schritt 530 wird die Transportunterlage in Richtung eines Standsockels, d.h. insbesondere eines endgültigen Aufstellungsortes der Wärmepumpe, transportiert. In einem weiteren Schritt 540 wird das wenigstens eine Befestigungsmittel gelöst. Vor dem Schritt 540, während des Schrittes 540 oder nach dem Schritt 540 wird in einem Schritt 550 wenigstens ein Transportband an den vier Gerätefüßen positioniert, wobei eine Ausdehnung des Fußtellers senkrecht zu der Standrichtung zumindest in eine Richtung größer ist als eine Ausdehnung des Fußsockels senkrecht zu der Standrichtung, um ein Verrutschen des Transportbandes in Standrichtung zu verhindern. Das Transportband kann dabei entweder nur an die Gerätefüße angelegt werden oder um einen oder mehrere der Gerätefüße gewickelt werden. In einem weiteren Schritt 560 wird dann die Wärmepumpe mit Hilfe des wenigstens einen Transportbandes zu dem Aufstellsockel der Wärmepumpe transportiert.

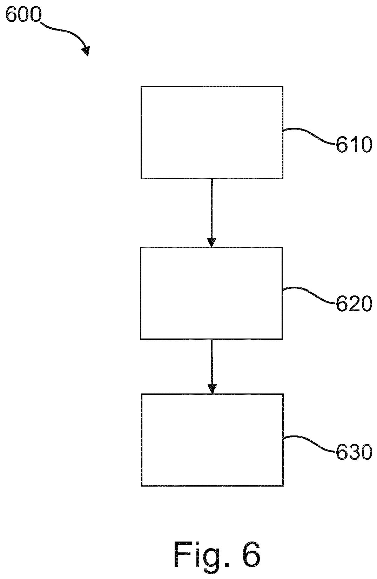

Fig. 6 zeigt eine schematische Darstellung zur Illustration eines ersten Ausführungsbeispiels des erfindungsgemäßen Verfahrens zur Montage einer Wärmepumpe. Das Verfahren 600 zum Transport einer Wärmepumpe umfasst in einem ersten Schritt 610 ein Einbringen von weiteren Befestigungsmitteln, bevorzugt Gewindestangen, in einen Aufstellsockel. Weiter wird in einem nächsten Schritt 620 die Wärmepumpe durch Aufstellen der Gerätefüße auf den Aufstellsockel aufgestellt und die Gerätefüße um die weiteren Befestigungsmitteln positioniert, so dass jeder Fußteller ein weiteres Befestigungsmittel senkrecht zu der Standrichtung von drei Seiten umgibt. In einem weiteren Schritt 630 wird die Wärmepumpe durch Befestigen der Gerätefüße an dem Aufstellsockel mit Hilfe von an den weiteren Befestigungsmitteln zu befestigenden Gegenbefestigungsmitteln, bevorzugt Gewindemuttern, befestigt, so dass in Standrichtung zwischen jedem der Gerätefüße und dem Aufstellsockel ein Kraftschluss entsteht. Bevorzugt umfasst das Verfahren 600 zusätzlich wenigstens die Schritte 550 und 560, wobei das Verfahren 600 auch die Schritte 510 bis 560 umfassen kann.

Jedes der Verfahren zum Transport einer Wärmepumpe und zur Montage einer Wärmepumpe kann zusätzlich die folgenden Schritte umfassen: Positionieren der vier Gerätefüße an der Bodenplatte der Wärmepumpe mit Hilfe von Haken, die an jedem der Fußsockel der Gerätefüße angeordnet sind, Führen von Befestigungsmitteln, bevorzugt Schrauben, durch den Fußsockel, wobei der Fußsockel Befestigungsbohrungen zum Führen der Befestigungsmittel aufweist, und Befestigen der Gerätefüße an der Bodenplatte durch Befestigen der Befestigungsmittel an der Bodenplatte.

Auch wenn in den Figuren verschiedene Aspekte oder Merkmale der Erfindung jeweils in Kombination gezeigt sind, ist für den Fachmann - soweit nicht anders angegeben - ersichtlich, dass die dargestellten und diskutierten Kombinationen nicht die einzig möglichen sind. Insbesondere können einander entsprechende Einheiten oder Merkmalskomplexe aus unterschiedlichen Ausführungsbeispielen miteinander ausgetauscht werden.

Es folgen weitere Überlegungen zu der Erfindung:
Es gibt unterschiedliche Möglichkeiten eine Wärmepumpe an einem Gebäude zu installieren, sei es auf einem Betonsockel oder einem Streifenfundament auf Bodenhöhe.

Für außenaufgestellte Luft/Wasser-Wärmepumpen kann es sinnvoll sein, Füße für die Wärmepumpe zu verwenden, um zum Beispiel Platz für eine Kondensatwanne bereitzustellen. Weiter ermöglichen Füße ein einfacheres Verschrauben der Wärmepumpe und damit ein Befestigen der Wärmepumpe unabhängig von einem Installationsuntergrund. Weitere selbstgestellte Aufgaben des Fußes sind eine Fixierung auf einer Holzpalette, wie sie zum Beliefern einer Wärmepumpe verwendet werden und eine Aufnahme eines Tragegurtes für den Transport der Wärmepumpe zum Aufstellort.

Die Idee ist es, die Wärmepumpe auf vier Füße, jeweils einen in jeder Ecke einer Bodenplatte, die als Bodenblech ausgestaltet sein kann, zu stellen. Dies gewährleistet einen sicheren Stand der Wärmepumpe. Die Wärmepumpe lässt sich so direkt ohne Zubehör auf einen Betonsockel oder auf Streifenfundamenten verschrauben.

Die Ausrichtung der Füße ist bevorzugt überall in dieselbe Richtung. So lässt sich ein Befestigungsmittel, z.B. Schrauben oder Gewindestangen, in den Betonsockel einbringen und die Wärmepumpe nachträglich aufsetzen und befestigen. Dies erleichtert die Montage und reduziert das Arbeitsaufkommen auf ein Minimum.

Der Fuß ist in einer Ausführungsform so geformt, dass sich der Fußteller um das Befestigungsmittel schieben lässt und mit einer Normscheibe oder einer mitgelieferten passenden Scheibe gegen den Untergrund, bevorzugt Beton, verspannen lässt. Die Aussparung ist so ausgelegt, dass eine gewisse Toleranz beim Einbringen des Befestigungsmittels gegeben ist, sich der Fußteller jedoch trotzdem mit einer Scheibe verspannen lässt. Die bevorzugte Dämpferbohrung kann einen Dämpfer unter dem Fuß aufnehmen, der für eine Schwingungsentkopplung zum Boden sorgt. Der Fuß wird vorzugsweise mittels Schrauben durch die Befestigungsbohrungen an der Bodenplatte der Wärmepumpe befestigt. Mittels des bevorzugten Hakens lässt sich der Fuß an der Bodenplatte positionieren, was die Montage vereinfacht.

Die schräge Bohrung, d.h. die Fixierbohrung befindet sich links und rechts am Gerätefuß und ist schräg ausgeführt. Diese dient zum Verschrauben des Gerätes auf einer Transportunterlage, zum Beispiel einer Holzpalette. Die Schräge ist sinnvoll, um die Schraube nach Fertigstellung des Gerätes noch mit einem geeigneten Werkzeug erreichen zu können. Der umlaufende Absatz des Fußtellers gegenüber dem Fußsockel dient der Sicherung eines Tragegurtes, der um den Fuß gewickelt werden kann. Mit diesem Tragesystem kann die Wärmepumpe zum Aufstellort befördert werden.

Der Fuß kann aus verschiedenen Materialien bestehen und mit verschiedenen Verfahren hergestellt werden, z.B. Zink Druckguss.

Die Erfindung betrifft einen Gerätefuß für eine Wärmepumpe, wobei der Gerätefuß einen Fußteller und einen Fußsockel umfasst und durch Aufstellung eine Standrichtung definiert, wobei der Fußteller in der Standrichtung unterhalb des Fußsockels angeordnet ist, wobei der Fußteller eine Aussparung aufweist, um mit einem Untergrund lösbar verbunden zu werden, wobei eine Ausdehnung des Fußtellers senkrecht zu der Standrichtung zumindest in eine Richtung größer ist als eine Ausdehnung des Fußsockels senkrecht zu der Standrichtung und wobei der Fußteller wenigstens eine zu der Standrichtung schräg verlaufende Fixierungsbohrung aufweist. Der erfindungsgemäße Gerätefuß befestigt an einer Wärmepumpe ermöglicht in verschiedenen Schritten eines Transports der Wärmepumpe eine einfache Fixierung der Wärmepumpe und erhöht dadurch die Sicherheit während des Transports.

## Patentansprüche

1. Gerätefuß (100) für eine Wärmepumpe, wobei der Gerätefuß (100) einen Fußteller (110) und einen Fußsockel (120) umfasst und durch Aufstellung eine Standrichtung (S) definiert,
wobei der Fußteller (110) in der Standrichtung (S) unterhalb des Fußsockels (120) angeordnet ist,
wobei der Fußteller (110) eine Aussparung (180) aufweist, um mit einem Untergrund lösbar verbunden zu werden,
wobei eine Ausdehnung des Fußtellers (110) senkrecht zu der Standrichtung (S) zumindest in eine Richtung größer ist als eine Ausdehnung des Fußsockels (120) senkrecht zu der Standrichtung (S) und
wobei der Fußteller (110) wenigstens eine zu der Standrichtung (S) schräg verlaufende Fixierungsbohrung (130) aufweist.

2. Gerätefuß (100) nach Anspruch 1, wobei die Ausdehnung des Fußtellers (110) senkrecht zu der Standrichtung (S) in allen Richtungen größer ist als die Ausdehnung des Fußsockels (120) senkrecht zu der Standrichtung (S).

3. Gerätefuß (100) nach einem der Ansprüche 1 und 2, wobei parallel zu der Standrichtung (S) eine Schnittebene definiert wird, wobei der Fußteller (110) eine erste Seite auf einer ersten Seite der Schnittebene und eine der ersten Seite gegenüberliegende zweite Seite auf einer zweiten Seite der Schnittebene, die sich von der ersten Seite unterscheidet, aufweist, wobei die wenigstens eine Fixierungsbohrung (130) auf der ersten Seite oder der zweiten Seite des Fußtellers (110) angeordnet ist und jeweils eine Gerade definiert, die die Schnittebene jeweils in einem Bereich schneidet, der in der Standrichtung (S) unterhalb des Fußtellers (110) liegt.

4. Gerätefuß (100) nach einem der vorherigen Ansprüche, wobei die Ausdehnung des Fußtellers (110) senkrecht zu der Standrichtung (S) in Standrichtung (S) zumindest teilweise größer wird.

5. Gerätefuß (100) nach einem der vorherigen Ansprüche, wobei der Fußteller (110) einen abgeschrägten Bereich (140) umfasst, wobei die wenigstens eine Fixierungsbohrung (130) in dem abgeschrägten Bereich (140) des Fußtellers (110) angeordnet ist.

6. Gerätefuß (100) nach Anspruch 5, wobei der Fußteller (110) eine Oberseite und eine in Standrichtung (S) unterhalb der Oberseite angeordnete Unterseite aufweist, wobei eine Gerade, die durch eine der wenigstens einen Fixierungsbohrung (130) definiert wird, senkrecht zu einer Ebene steht, die durch eine an der Oberseite des Fußtellers (110) befindlichen Öffnung der wenigstens einen Fixierungsbohrung (130), insbesondere durch einen Rand der an der Oberseite des Fußtellers (110) befindlichen Öffnung, definiert wird.

7. Gerätefuß (100) nach einem der Ansprüche 5 und 6, wobei der abgeschrägte Bereich (140) zumindest an einer äußeren Kante des Fußtellers (110) verläuft.

8. Gerätefuß (100) nach Anspruch 7, wobei der Fußteller (110) eine Oberseite und eine in Standrichtung (S) unterhalb der Oberseite angeordnete Unterseite aufweist, wobei der abgeschrägte Bereich (140) zumindest an einer äußeren Kante der Oberseite des Fußtellers (110) verläuft.

9. Gerätefuß (100) nach einem der vorherigen Ansprüche, wobei der Fußteller (110) eine Dämpferbohrung (150) zur Aufnahme eines Dämpfers aufweist.

10. Gerätefuß (100) nach einem der vorherigen Ansprüche, wobei der Fußsockel (120) wenigstens eine Befestigungsbohrung (160), bevorzugt zwei Befestigungsbohrungen (160), zur lösbaren Befestigung des Gerätefußes an der Wärmepumpe aufweist.

11. Gerätefuß (100) nach Anspruch 10, wobei jede der wenigstens einen Befestigungsbohrung (160) wenigstens zwei unterschiedliche Durchmesser aufweist.

12. Gerätefuß (100) nach einem der vorherigen Ansprüche, wobei der Fußsockel (120) einen Haken (170) zur Positionierung des Gerätefußes (100) an der Wärmepumpe aufweist.

13. Gerätefuß (100) nach Anspruch 12, wobei der Fußsockel (120) eine Oberseite und eine in Standrichtung (S) unterhalb der Oberseite angeordnete Unterseite aufweist, wobei der Haken (170) an einer Oberseite des Fußsockels (120) angeordnet ist.

14. Gerätefuß (100) nach einem der Ansprüche 12 und 13, wobei der Haken (170) senkrecht zu der Standrichtung (S) eckig, bevorzugt viereckig, ausgestaltet ist.

15. Gerätefuß (100) nach einem der vorherigen Ansprüche, wobei die Aussparung (180) so geformt ist, dass in einem Fall, in dem der Gerätefuß (100) mit dem Untergrund durch ein Befestigungsmittel verbunden ist, der Fußteller (110) das Befestigungsmittel senkrecht zu der Standrichtung (S) von drei Seiten umgibt.

16. Gerätefuß (100) nach einem der vorherigen Ansprüche, wobei die Aussparung (180) so geformt ist, dass in einem Fall, in dem der Gerätefuß (100) mit dem Untergrund verbunden ist, der Gerätefuß (100) durch einen Kraftschluss mit dem Untergrund verbunden ist.

17. Gerätefuß (100) nach einem der vorherigen Ansprüche, wobei die Aussparung (180) in einer Ebene senkrecht zu der Standrichtung (S) rechteckig oder nahezu rechteckig geformt ist.

18. Gerätefuß (100) nach einem der vorherigen Ansprüche, wobei der Gerätefuß (100) einstückig ausgestaltet ist und bevorzugt als Druckgussteil, besonders bevorzugt Zinkdruckgussteil, hergestellt ist.

19. Gerätefuß (100) nach einem der vorherigen Ansprüche, wobei der Fußsockel (110) in der Standrichtung (S) ein höhenverstellbares Element umfasst, wobei der Fußsockel (110) bevorzugt ein Gewinde mit wenigstens einem Gewindekörper umfasst, der gegenüber dem Gewinde in der Standrichtung (S) verstellbar ist.

20. Bodenplatte (200) für eine Wärmepumpe mit vier Gerätefüßen (100) nach einem der Ansprüche 1 bis 19, wobei die vier Gerätefüße (100) derart zu einander ausgerichtet sind, dass die Aussparungen (180) der vier Gerätefüße (100) senkrecht zu der Standrichtung (S) in dieselbe Richtung zeigen.

21. Bodenplatte (200) nach Anspruch 20, wobei eine Fläche senkrecht zu der Standrichtung (S), die durch eine Ausdehnung der vier Gerätefüße (100) senkrecht zu der Standrichtung (S) und durch Zwischenbereiche zwischen den vier Gerätefüßen (100) senkrecht zu der Standrichtung (S) definiert ist, durch eine maximale Ausdehnung der Bodenplatte (200) senkrecht zu der Standrichtung (S) begrenzt ist.

22. Wärmepumpe mit einer Bodenplatte (200) nach einem der Ansprüche 20 und 21.

23. Verfahren (500) zum Transport einer Wärmepumpe mit einer Bodenplatte, wobei die Bodenplatte vier Gerätefüße aufweist, wobei jeder der vier Gerätefüße einen Fußteller und einen Fußsockel umfasst und durch Aufstellung eine Standrichtung (S) definiert, wobei das Verfahren (500) die Schritte aufweist:
Aufstellen (510) der Wärmepumpe durch Aufstellen der Gerätefüße auf eine Transportunterlage,
Fixieren (520) der Wärmepumpe durch Fixieren der Gerätefüße an der Transportunterlage mit Hilfe wenigstens eines Befestigungsmittels, bevorzugt einer Schraube, wobei das Befestigungsmittel durch eine Fixierungsbohrung des Fußtellers geführt wird, wobei die Fixierungsbohrung zu der Standrichtung (S) schräg verläuft,
Transportieren (530) der Transportunterlage in Richtung eines Aufstellsockels für die Wärmepumpe,
Lösen (540) des wenigstens einen Befestigungsmittels,
Positionieren (550) wenigstens eines Transportbandes an den vier Gerätefüßen, wobei eine Ausdehnung des Fußtellers senkrecht zu der Standrichtung (S) zumindest in eine Richtung größer ist als eine Ausdehnung des Fußsockels senkrecht zu der Standrichtung (S), um ein Verrutschen des Transportbandes in Standrichtung (S) zu verhindern und
Transportieren (560) der Wärmepumpe mit Hilfe des wenigstens einen Transportbandes zu einem Aufstellsockel der Wärmepumpe.

24. Verfahren (600) zur Montage einer Wärmepumpe mit einer Bodenplatte, wobei die Bodenplatte vier Gerätefüße aufweist, wobei jeder der vier Gerätefüße einen Fußteller und einen Fußsockel umfasst und durch Aufstellung eine Standrichtung (S) definiert, wobei das Verfahren (600) die Schritte aufweist:
Einbringen (610) von weiteren Befestigungsmitteln, bevorzugt Gewindestangen, in einen Aufstellsockel,
Aufstellen der Wärmepumpe durch Aufstellen der Gerätefüße auf den Aufstellsockel und Positionieren (620) der Gerätefüße um die weiteren Befestigungsmittel, so dass jeder Fußteller ein weiteres Befestigungsmittel senkrecht zu der Standrichtung von drei Seiten umgibt, und
Befestigen (630) der Wärmepumpe durch Befestigen der Gerätefüße an dem Aufstellsockel mit Hilfe von an den weiteren Befestigungsmitteln zu befestigenden Gegenbefestigungsmitteln, bevorzugt Gewindemuttern, so dass in Standrichtung zwischen jedem der Gerätefüße und dem Aufstellsockel ein Kraftschluss entsteht.

25. Verfahren nach einem der Ansprüche 23 und 24, wobei das Verfahren vor Aufstellen der Wärmepumpe die Schritte aufweist,
Positionieren der vier Gerätefüße an der Bodenplatte der Wärmepumpe mit Hilfe von Haken, die an jedem der Fußsockel der Gerätefüße angeordnet sind,
Führen von dritten Befestigungsmitteln, bevorzugt Schrauben, durch den Fußsockel, wobei der Fußsockel Befestigungsbohrungen zum Führen der dritten Befestigungsmittel aufweist, und
Befestigen der Gerätefüße an der Bodenplatte durch Befestigen der dritten Befestigungsmittel an der Bodenplatte.
